# EUROPEAN PATENT APPLICATION

(11) **EP 4 625 083 A1**
(43) Date of publication of application: **01.10.2025**
(21) Application number: 22968155.6
(22) Date of filing: 14.12.2022

(54) **METHOD AND APPARATUS FOR INVOKING COMPUTING RESOURCES, AND INTELLIGENT DRIVING DEVICE**

(71) Applicant: Shenzhen Yinwang Intelligent Technologies Co., Ltd., Shenzhen, Guangdong 518110 (CN)
(72) Inventor: DING, Tao, Shenzhen, Guangdong 518129 (CN)
(74) Representative: Gill Jennings & Every LLP
(86) International application number: PCT/CN2022/139058
(87) International publication number: WO 2024/124445

(57) **Abstract**

Embodiments of this application provide a computing resource invoking method and apparatus, and an intelligent driving device. The computing resource invoking method and apparatus are applicable to a central computing platform. The central computing platform supports a plurality of service domains, the central computing platform includes a parallel acceleration algorithm set and a plurality of computing resources, and each of the plurality of computing resources corresponds to N parallel acceleration algorithms, where N is greater than or equal to 1. The method includes: obtaining a computing request initiated by a to-be-run service in a first service domain, where the first service domain is any one of the plurality of service domains; determining, based on the computing request, a target parallel acceleration algorithm required for running the to-be-run service; invoking a target computing resource corresponding to the target parallel acceleration algorithm from the plurality of computing resources; and running the to-be-run service based on the target computing resource. The solutions of this application can improve utilization of the computing resources on the central computing platform.

## Description

### TECHNICAL FIELD

This application relates to the field of intelligent driving technologies, and more specifically, to a computing resource invoking method and apparatus, and an intelligent driving device.

### BACKGROUND

A central computing platform can integrate computing resources of different service domains into a whole, greatly reducing resources and costs. It has become a development direction in fields such as intelligent driving, smart home, and servers. A vehicle is used as an example. The central computing platform may provide computing resources for service domains such as an intelligent driving domain, a vehicle control domain, and a cockpit domain.

Currently, the computing resources on the central computing platform are usually classified in advance based on the service domains, that is, different service domains correspond to different computing resources, and computing can be performed for each service domain only based on a computing resource obtained through classification in advance. Consequently, utilization of the computing resources is low.

### SUMMARY

This application provides a computing resource invoking method and apparatus, and an intelligent driving device, to improve utilization of computing resources.

According to a first aspect, a computing resource invoking method is provided, which is applied to a central computing platform. The central computing platform supports a plurality of service domains, the central computing platform includes a parallel acceleration algorithm set and a plurality of computing resources, and each of the plurality of computing resources corresponds to N parallel acceleration algorithms in the parallel acceleration algorithm set, where N is a positive integer greater than or equal to 1. The method includes: obtaining a computing request initiated by a to-be-run service in a first service domain, where the first service domain is any one of the plurality of service domains; determining, based on the computing request, a target parallel acceleration algorithm required for running the to-be-run service; invoking a target computing resource corresponding to the target parallel acceleration algorithm from the plurality of computing resources; and running the to-be-run service based on the target computing resource.

The parallel acceleration algorithm means that steps of the algorithm are synchronously computed, instead of being performed in a serial manner, so that a computing speed can be improved.

According to the solutions of this application, when the computing resource is invoked, the target parallel acceleration algorithm required for running the to-be-run service may be first determined based on the computing request of the to-be-run service, and then the target computing resource corresponding to the target parallel acceleration algorithm is invoked from the plurality of computing resources on the central computing platform based on a correspondence between the target parallel acceleration algorithm and the computing resource. Based on this invoking manner, the plurality of computing resources on the central computing platform may be shared by the plurality of service domains, instead of being dedicated to a specific service domain, so that utilization of the computing resources can be improved.

In addition, in a conventional solution, a parallel acceleration algorithm is usually independently developed and deployed for each service domain based on a computing resource obtained through classification in advance. In this process, a large amount of repeated development is involved. As a result, development efficiency of the parallel acceleration algorithm is low and development costs are high.

In this application, parallel acceleration algorithms required by the plurality of service domains are configured as one parallel acceleration algorithm set through centralized development of the parallel acceleration algorithms, and in actual use, a target parallel acceleration algorithm is determined from the set based on the computing request of the to-be-run service, to avoid repeated development of the parallel acceleration algorithm for each service domain. In this way, development efficiency of the parallel acceleration algorithm can be improved, and development costs of the parallel acceleration algorithm can be reduced.

With reference to the first aspect, in some implementations of the first aspect, the computing request includes an identifier of the to-be-run service, and the identifier includes at least one of a functional safety level identifier, a data precision identifier, and a computing resource range that correspond to the to-be-run service.

The computing resource range may include a computing resource type, and may further include a quantity or a proportion (that is, a required computing capability) of computing units in a required computing resource.

The identifier of the to-be-run service may be understood as a computing requirement of the to-be-run service, for example, a requirement of the to-be-run service for data precision, a requirement of the to-be-run service for a functional safety level, and a requirement of the to-be-run service for the computing resource range. Different services usually correspond to different computing requirements.

In this application, a parallel acceleration algorithm and a computing resource that meet the computing requirement of the to-be-run service may be adaptively determined based on the identifier of the to-be-run service. Based on this, different computing resources may be scheduled based on computing requirements of different to-be-run services.

With reference to the first aspect, in some implementations of the first aspect, the identifier includes the data precision identifier and the computing resource range, and the determining, based on the computing request, the target parallel acceleration algorithm required for running the to-be-run service includes: selecting, from the parallel acceleration algorithm set, M parallel acceleration algorithms that meet the data precision identifier, where M is a positive integer greater than or equal to 1; and determining computing resources corresponding to the M parallel acceleration algorithms, and selecting, from the computing resources corresponding to the M parallel acceleration algorithms, one or more computing resources that meet the computing resource range as the target computing resource.

In this application, the parallel acceleration algorithms may be first determined based on the data precision identifier, and then the one or more computing resources that meet the requirement of the to-be-run service for the computing resource range are selected from the computing resources corresponding to the determined parallel acceleration algorithms as the target computing resource, so that the determined parallel acceleration algorithm can meet the requirement of the to-be-run service for the data precision, and the target computing resource can meet the requirement of the to-be-run service for the computing resource range.

With reference to the first aspect, in some implementations of the first aspect, the identifier further includes the functional safety level identifier, and the target parallel acceleration algorithm meets a functional safety level corresponding to the functional safety level identifier.

In this application, the identifier of the to-be-run service may further include the functional safety level identifier, so that the target parallel acceleration algorithm can meet the requirement of the to-be-run service for the functional safety level.

With reference to the first aspect, in some implementations of the first aspect, the central computing platform further includes a cache, and before determining, based on the computing request, the target parallel acceleration algorithm required for running the to-be-run service, the method further includes: determining whether the cache includes a computing result corresponding to the computing request, and when the cache does not include the computing result corresponding to the computing request, performing the step of determining, based on the computing request, the target parallel acceleration algorithm required for running the to-be-run service.

In this application, the cache is introduced, so that when the computing request initiated by the to-be-run service is obtained, whether the cache includes the computing result corresponding to the computing request may be first checked from the cache. If the cache includes the computing result, the computing result may be directly obtained from the cache. If the cache does not include the computing result, the foregoing step of determining, based on the computing request, the target parallel acceleration algorithm required for running the to-be-run service is performed, to avoid repeated computing.

With reference to the first aspect, in some implementations of the first aspect, the central computing platform further includes a cache, and the determining, based on the computing request, the target parallel acceleration algorithm required for running the to-be-run service includes: when the computing request indicates not to obtain data in the cache, performing the step of determining, based on the computing request, the target parallel acceleration algorithm required for running the to-be-run service.

In this application, the cache is introduced, so that when the computing request initiated by the to-be-run service is obtained and the computing request indicates to obtain the data in the cache, whether the cache includes the computing result corresponding to the computing request may be checked from the cache, to avoid repeated computing. When the computing request indicates not to obtain the data in the cache, the step of determining, based on the computing request, the target parallel acceleration algorithm required for running the to-be-run service may be performed, to directly obtain a computing result that meets the requirement of the to-be-run service.

In an implementation, the computing request may include a cache identifier, and the cache identifier may indicate to enable the cache, disable the cache, or not limit whether to enable the cache. Enabling the cache may mean to obtain the data in the cache, and/or to store the computing result in the cache. Disabling the cache may mean not to obtain the data in the cache, and/or not to store the computing result in the cache.

With reference to the first aspect, in some implementations of the first aspect, the cache stores one or more entries, and each of the one or more entries includes a correspondence among a computing function, a computing input, and a computing result.

The computing function may be specifically a function name or a function identifier of the computing function, and the computing function is a computing function related to the parallel acceleration algorithm.

Based on the cache, in an actual operation, searching may be performed in the cache based on computing input data related to the to-be-run service. If the input data is found in the cache, a computing result corresponding to the input data in the cache may be used as the computing result required by the to-be-run service.

With reference to the first aspect, in some implementations of the first aspect, each entry further includes data precision corresponding to the computing function.

In this application, each entry may further include the data precision corresponding to the computing function, so that when the computing result is obtained from the cache, whether the computing result meets the requirement may be determined based on the data precision in the cache and data precision required for computing the to-be-run service. It should be noted that, when the data precision required for computing the to-be-run service is lower than the data precision in the cache, the computing result may be obtained; or when the data precision required for computing the to-be-run service is higher than the data precision in the cache, the computing result cannot be obtained.

With reference to the first aspect, in some implementations of the first aspect, when the cache is an intra-domain cache, a capacity of the intra-domain cache is determined based on at least one of the following: a quantity of parallel acceleration algorithms that are invoked in the first service domain within given time, a quantity of times for invoking the parallel acceleration algorithm, a size of input data of the invoked parallel acceleration algorithm, a size of output data of the invoked parallel acceleration algorithm, and the like; or when the cache is an inter-domain cache, a capacity of the inter-domain cache is determined based on at least one of the following: a domain quantity of the plurality of service domains, an intra-domain cache capacity in each of the plurality of service domains, a quantity of parallel acceleration algorithms reused in the plurality of service domains, a total quantity of parallel acceleration algorithms invoked in each service domain, computing time consumed by the parallel acceleration algorithm in each service domain, and the like within given time.

The intra-domain cache is a cache corresponding to each of the plurality of service domains, and the inter-domain cache is a cache corresponding to the plurality of service domains.

With reference to the first aspect, in some implementations of the first aspect, the computing resource includes at least one of the following: scalable vector extension (scalable vector extension, SVE), a graphics processing unit (graphics processing unit, GPU), digital vision pre-processing (digital video pre-processing, DVPP), an image signal processor (image signal processor, ISP), an artificial intelligence core (artificial intelligence core, AI core), a vector core (vector core), and the like.

According to a second aspect, a computing resource invoking apparatus is provided, which is used on a central computing platform. The central computing platform supports a plurality of service domains, the central computing platform includes a parallel acceleration algorithm set and a plurality of computing resources, and each of the plurality of computing resources corresponds to N parallel acceleration algorithms in the parallel acceleration algorithm set, where N is a positive integer greater than or equal to 1. The apparatus includes: an obtaining module, configured to obtain a computing request initiated by a to-be-run service in a first service domain, where the first service domain is any one of the plurality of service domains; and a processing module, configured to: determine, based on the computing request, a target parallel acceleration algorithm required for running the to-be-run service; invoke a target computing resource corresponding to the target parallel acceleration algorithm from the plurality of computing resources; and run the to-be-run service based on the target computing resource.

With reference to the second aspect, in some implementations of the second aspect, the computing request includes an identifier of the to-be-run service, and the identifier includes at least one of a functional safety level identifier, a data precision identifier, and a computing resource range that correspond to the to-be-run service.

With reference to the second aspect, in some implementations of the second aspect, the identifier includes the data precision identifier and the computing resource range, and the processing module is configured to: select, from the parallel acceleration algorithm set, M parallel acceleration algorithms that meet the data precision identifier, where M is a positive integer greater than or equal to 1; and determine computing resources corresponding to the M parallel acceleration algorithms, and select, from the computing resources corresponding to the M parallel acceleration algorithms, one or more computing resources that meet the computing resource range as the target computing resource.

With reference to the second aspect, in some implementations of the second aspect, the identifier further includes the functional safety level identifier, and the target parallel acceleration algorithm meets a functional safety level corresponding to the functional safety level identifier.

With reference to the second aspect, in some implementations of the second aspect, the central computing platform further includes a cache, and before determining, based on the computing request, the target parallel acceleration algorithm required for running the to-be-run service, the processing module is further configured to: determine whether the cache includes a computing result corresponding to the computing request, and when the cache does not include the computing result corresponding to the computing request, perform the step of determining, based on the computing request, the target parallel acceleration algorithm required for running the to-be-run service.

With reference to the second aspect, in some implementations of the second aspect, the central computing platform further includes a cache, and the processing module is configured to: when the computing request indicates not to obtain data in the cache, perform the step of determining, based on the computing request, the target parallel acceleration algorithm required for running the to-be-run service.

With reference to the second aspect, in some implementations of the second aspect, the cache stores one or more entries, and each of the one or more entries includes a correspondence among a computing function, a computing input, and a computing result.

With reference to the second aspect, in some implementations of the second aspect, each entry further includes data precision corresponding to the computing function.

With reference to the second aspect, in some implementations of the second aspect, when the cache is an intra-domain cache, a capacity of the intra-domain cache is determined based on at least one of the following: a quantity of parallel acceleration algorithms that are invoked in the first service domain within given time, a quantity of times for invoking the parallel acceleration algorithm, a size of input data of the invoked parallel acceleration algorithm, and a size of output data of the invoked parallel acceleration algorithm; or when the cache is an inter-domain cache, a capacity of the inter-domain cache is determined based on at least one of the following: a domain quantity of the plurality of service domains, an intra-domain cache capacity in each of the plurality of service domains, a quantity of parallel acceleration algorithms reused in the plurality of service domains, a total quantity of parallel acceleration algorithms invoked in each service domain, and computing time consumed by the parallel acceleration algorithm in each service domain within given time.

With reference to the second aspect, in some implementations of the second aspect, the computing resource includes at least one of SVE, a GPU, DVPP, an ISP, an AI core, a vector core, and the like.

According to a third aspect, a computing resource invoking apparatus is provided, including an input/output interface, a processor, and a memory. The processor is configured to control the input/output interface to receive/send a signal or information. The memory is configured to store a computer program. The processor is configured to invoke the computer program from the memory and run the computer program, so that the invoking apparatus is enabled to perform the invoking method according to any one of the first aspect or the possible implementations of the first aspect.

According to a fourth aspect, a computer-readable medium is provided, where the computer-readable medium stores program code. When the program code is run on a computer, the computer is enabled to perform the invoking method according to any one of the first aspect or the possible implementations of the first aspect.

According to a fifth aspect, a computer program product is provided, including instructions. When the instructions are run on a computer, the invoking method according to any one of the first aspect or the possible implementations of the first aspect is performed.

According to a sixth aspect, a computing device is provided, including at least one processor and a memory. The at least one processor is coupled to the memory, and is configured to read and execute instructions in the memory, to perform the invoking method according to any one of the first aspect or the possible implementations of the first aspect.

According to a seventh aspect, a chip is provided. The chip includes a circuit configured to perform the invoking method according to any one of the first aspect or the possible implementations of the first aspect.

According to an eighth aspect, an intelligent driving device is provided, including the invoking apparatus according to any one of the second aspect or the possible implementations of the second aspect, or including the invoking apparatus according to the third aspect.

### BRIEF DESCRIPTION OF DRAWINGS

FIG. 1 is a functional diagram of a vehicle 100 according to an embodiment of this application;
FIG. 2 is a diagram of a system architecture of a central computing platform according to an embodiment of this application;
FIG. 3 is a schematic flowchart of a computing resource invoking method according to an embodiment of this application;
FIG. 4 is a diagram of a structure of a computing resource invoking apparatus according to an embodiment of this application; and
FIG. 5 is a block diagram of a hardware structure of a computing resource invoking apparatus according to an embodiment of this application.

### DESCRIPTION OF EMBODIMENTS

In descriptions of embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists.

In this application, at least one means one or more, and a plurality of means two or more. "At least one of the following items (pieces)" or a similar expression thereof means any combination of these items, including a single item (piece) or any combination of a plurality of items (pieces). For example, at least one item (pieces) of a, b, or c may indicate: a, b, c, a and b, a and c, b and c, or a, b, and c, where a, b, and c may be singular or plural.

Prefix words "first", "second", and the like in embodiments of this application are merely intended to distinguish between different objects, and impose no limitation on locations, sequences, priorities, quantities, content, or the like of the described objects. Use of prefixes such as ordinal numbers used to distinguish the described objects in embodiments of this application does not constitute a limitation on the described objects. For descriptions of the described objects, refer to the context description in claims or embodiments, and the use of such prefixes should not constitute a redundant limitation.

The following describes technical solutions of embodiments in this application with reference to accompanying drawings.

The solutions of this application may be applied to an intelligent driving device. The intelligent driving device may include a road vehicle, a water vehicle, an air vehicle, an industrial device, an agricultural device, an entertainment device, or the like. For example, the intelligent driving device may be a vehicle. The vehicle is a vehicle in a broad sense, and may be a transportation tool (for example, a commercial vehicle, a passenger vehicle, a motorcycle, a flight vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), an amusement device, a toy vehicle, or the like. A type of the vehicle is not specifically limited in this application. For another example, the intelligent driving device may be a transportation tool like an airplane or a ship.

The solutions of this application may be further applied to devices such as a server, an intelligent terminal, a smart home, and an in-vehicle embedded device. For example, the solutions of this application may be applied to a smartphone, a desktop computer, a notebook computer, a tablet computer, a wearable device, a robot, a microcontroller unit (microcontroller unit, MCU), or an electronic control unit (electronic control unit, ECU).

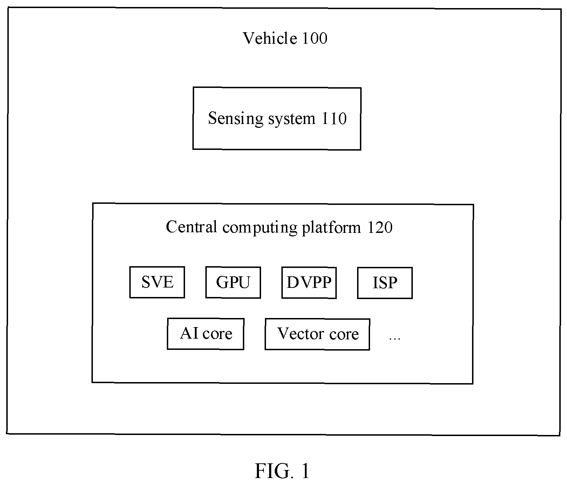

With reference to FIG. 1, the following describes an application scenario of this application by using a vehicle as an example.

FIG. 1 is a functional diagram of a vehicle 100 according to an embodiment of this application. It should be understood that FIG. 1 and related descriptions are merely examples, and an actual vehicle may not be limited thereto. As shown in FIG. 1, the vehicle 100 may include a sensing system 110 and a central computing platform 120.

The sensing system 110 may include one or more sensors that are configured to sense information about an environment around the vehicle 100. For example, the sensing system 110 may include a positioning system, and the positioning system may be a global positioning system (global positioning system, GPS), or may be a BeiDou system or another positioning system, or an inertial measurement unit (inertial measurement unit, IMU). For another example, the sensing system 110 may further include one or more of a lidar, a millimeter-wave radar, an ultrasonic radar, and a camera apparatus.

The central computing platform 120 is configured to analyze and process data sensed by the sensing system 110, and control some or all functions of the vehicle 100. The central computing platform 120 may include at least one type of computing resource (for example, may be at least one of SVE, a GPU, DVPP, an ISP, an AI core, and a vector core). Each type of computing resource may include a plurality of computing units that run in parallel, and these computing units that run in parallel may provide a parallel computing capability.

For example, a service domain of the vehicle 100 includes service domains such as an intelligent driving domain, a vehicle control domain, and a cockpit domain. In a conventional solution, computing resources on the central computing platform 120 are usually classified in advance based on these service domains. In addition, a parallel acceleration algorithm is usually independently developed and deployed for each service domain. Based on a conventional solution, a computing resource can be dedicated only to a service domain obtained through classification. In this case, if the service domain involves a small quantity of services, utilization of the computing resource corresponding to the service domain is low, and consequently a waste of resources is caused. In addition, parallel computing requirements of each service domain mainly focus on mainstream acceleration requirements such as an acceleration capability of image processing, an acceleration capability of point cloud processing, and an acceleration capability of basic mathematics. If a parallel acceleration algorithm is independently developed for each service domain, a large amount of repeated development is involved. As a result, development efficiency of the parallel acceleration algorithm is low and development costs are high.

Based on this, in this application, parallel acceleration algorithms are developed in a centralized manner and the computing resource is shared, to improve utilization of the computing resource and increase development efficiency of the parallel acceleration algorithm, and reduce development costs of the parallel acceleration algorithm.

The solutions of this application may be applied to an in-vehicle central computing platform, or may be applied to a computing platform of a device such as a server, an intelligent terminal, a smart home, or an in-vehicle embedded device. This is not limited. For ease of understanding, the following mainly uses the in-vehicle central computing platform as an example for description.

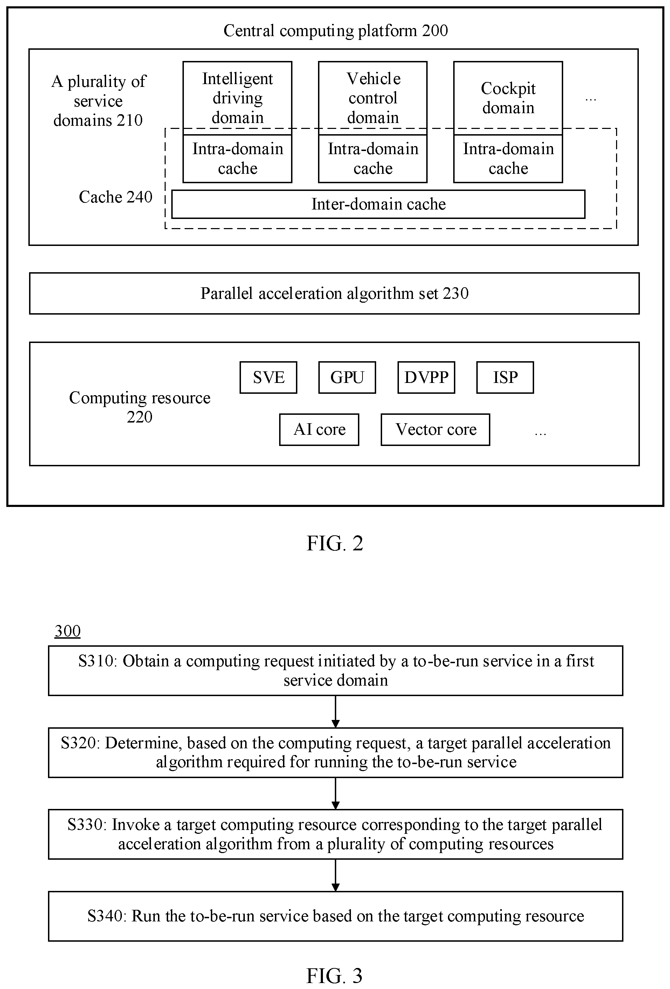

FIG. 2 is a diagram of a system architecture of a central computing platform according to an embodiment of this application. As shown in FIG. 2, a central computing platform 200 provided in this application may support a plurality of service domains 210. A vehicle is used as an example. The plurality of service domains may be, for example, service domains such as an intelligent driving domain, a vehicle control domain, and a cockpit domain.

The central computing platform 200 may include a plurality of computing resources 220, for example, may be at least one of computing resources such as SVE, a GPU, DVPP, an ISP, an AI core, and a vector core.

A parallel acceleration algorithm set 230 may be further deployed on the central computing platform 200. The parallel acceleration algorithm set 230 includes a plurality of different parallel acceleration algorithms, and the plurality of different parallel acceleration algorithms are developed in a centralized manner based on requirements of the plurality of service domains 210. Compared with a conventional solution in which a parallel acceleration algorithm is independently developed and deployed for each service domain, in this application, the parallel acceleration algorithm set 230 is centrally developed and deployed on the central computing platform 200, so that repeated development and deployment of the parallel acceleration algorithm can be avoided.

Each of the plurality of computing resources 220 may correspond to N parallel acceleration algorithms in the parallel acceleration algorithm set 230, where N is a positive integer greater than or equal to 1. It should be understood that different types of computing resources may correspond to a same parallel acceleration algorithm. Optionally, a correspondence between the computing resource and the parallel acceleration algorithm may be preconfigured on the central computing platform 200.

The parallel acceleration algorithm means that steps of the algorithm are synchronously computed, instead of being performed in a serial manner, so that a computing speed can be improved. The parallel acceleration algorithm may include an image processing algorithm, a point cloud processing algorithm, a basic mathematical algorithm, and the like. The image processing algorithm may be, for example, a corrosion algorithm, a dilation algorithm, or an affine algorithm. The point cloud processing algorithm may be, for example, a segmentation algorithm, a feature point extraction algorithm, or a clustering algorithm. The basic mathematical algorithm may be, for example, a general matrix multiplication algorithm, a matrix inversion algorithm, or a sin/cosine (sin/cos) algorithm.

The central computing platform 200 may be further provided with a cache 240, and the cache 240 may be, for example, an intra-domain cache and/or an inter-domain cache. The intra-domain cache is a cache corresponding to each of the plurality of service domains 210, and the inter-domain cache is a cache corresponding to the plurality of service domains 210. In addition, for cache content of the cache 240, a manner of determining a size of a cache capacity, a cache permutation management policy, and the like, refer to the following descriptions.

Based on the foregoing central computing platform 200, the following describes a method for invoking the computing resource 220 on the central computing platform 200 with reference to FIG. 3.

FIG. 3 is a schematic flowchart of a computing resource invoking method according to an embodiment of this application. As shown in FIG. 3, the method 300 includes steps S310 to S340. The following describes these steps in detail.

S310: Obtain a computing request initiated by a to-be-run service in a first service domain, where the first service domain may be any one of a plurality of service domains supported by the central computing platform 200.

The computing request may include an identifier of the to-be-run service, and the identifier may include at least one of a functional safety level identifier, a data precision identifier, a computing resource range, and the like that correspond to the to-be-run service. The identifier may further include another resource range identifier, for example, an identifier of a required bandwidth resource range and an identifier of a required memory space size.

It should be understood that the identifier in the computing request may be understood as a computing requirement of the to-be-run service, for example, a requirement of the to-be-run service for data precision, a requirement of the to-be-run service for a functional safety level, and a requirement of the to-be-run service for the computing resource range. Different to-be-run services usually correspond to different computing requirements. In this application, a parallel acceleration algorithm and a computing resource that meet the computing requirement of the to-be-run service may be adaptively determined based on the identifier of the to-be-run service. In this application, different computing resources may be scheduled based on computing requirements of different to-be-run services.

The functional safety level identifier may be, for example, any one of identifiers such as an automotive safety integration level (automotive safety integration level, ASIL) A identifier, an ASIL B identifier, an ASIL C identifier, an ASIL D identifier, an ASIL quality management (quality management, QM) identifier, or an identifier indicating that a functional safety level is not limited.

The data precision identifier may be, for example, any one of identifiers such as an identifier indicating that data precision meets 10⁻³, an identifier indicating that data precision meets 10⁻⁴, an identifier indicating that data precision meets 10⁻⁵, or an identifier indicating that data precision is not limited.

The computing resource range may include a type of a computing resource, and in addition to the type of the computing resource, may further include a quantity or a proportion (that is, a required computing capability) of computing units in a required computing resource.

S320: Determine, based on the computing request, a target parallel acceleration algorithm required for running the to-be-run service.

In an implementation, when the computing request includes the data precision identifier and an identifier of the computing resource range, M parallel acceleration algorithms that meet the data precision identifier are first selected from the parallel acceleration algorithm set, where M is a positive integer greater than or equal to 1; and then computing resources corresponding to the M parallel acceleration algorithms are determined, and one or more computing resources that meet the computing resource range are selected, from the computing resources corresponding to the M parallel acceleration algorithms, as the target computing resource, so that the determined parallel acceleration algorithm can meet the requirement of the to-be-run service for the data precision and the target computing resource can meet the requirement of the to-be-run service for the computing resource range.

Optionally, a correspondence among the data precision, the parallel acceleration algorithm, the computing resource, and the like may be preconfigured, so that in an actual operation, the target parallel acceleration algorithm and the target computing resource may be determined with reference to the requirement of the to-be-run service and the correspondence.

Optionally, when the computing request further includes the functional safety level identifier, the target parallel acceleration algorithm further needs to meet a functional safety level corresponding to the functional safety level identifier.

In an actual operation, a computing resource corresponding to the target parallel acceleration algorithm may be first determined, and then a computing resource that can run the to-be-run service is determined as the target computing resource based on the requirement of the to-be-run service for the computing resource range, an idle state of the computing resource corresponding to the target parallel acceleration algorithm, a running speed of the computing resource, and the like. It should be understood that the finally determined target computing resource may be a plurality of computing units that are currently in an idle state in one computing resource, and the to-be-run service may run in parallel on the plurality of computing units. Alternatively, the target computing resource may be a plurality of computing units that are currently in an idle state on a plurality of computing resources, and the to-be-run service may run in parallel on the plurality of computing units on the plurality of computing resources.

For example, it is assumed that the type of the computing resource determined based on the requirement of the to-be-run service includes SVE and DVPP. 20% of computing units on the SVE are occupied and remaining computing units can meet a requirement of the to-be-run service for a quantity of computing resources, and 90% of computing units on the DVPP are occupied and remaining computing units cannot meet the requirement of the to-be-run service for the quantity of computing resources. To ensure running of the to-be-run service, the SVE may be used as the target computing resource, and a part of the computing units that are not occupied on the SVE are invoked to run the to-be-run service.

For example, similarly, it is assumed that the type of the computing resource determined based on the requirement of the to-be-run service includes SVE and DVPP. 20% of computing units on the SVE are occupied and 90% of computing units on the DVPP are occupied. Although unoccupied computing units on the DVPP alone cannot meet a requirement of the to-be-run service for a quantity of computing resources, because the algorithm runs faster on the DVPP, in an actual operation, unoccupied computing units on the SVE and the DVPP may be combined and invoked to run the to-be-run service.

S330: Invoke a target computing resource corresponding to the target parallel acceleration algorithm from the plurality of computing resources.

S340: Run the to-be-run service based on the target computing resource.

According to the solutions of this application, when the computing resource is invoked, the target parallel acceleration algorithm required for running the to-be-run service may be first determined based on the computing request of the to-be-run service, and then the target computing resource corresponding to the target parallel acceleration algorithm is invoked from the plurality of computing resources on the central computing platform based on a correspondence between the target parallel acceleration algorithm and the computing resource. Based on this invoking manner, the plurality of computing resources on the central computing platform may be shared and invoked by a plurality of service domains, instead of being dedicated to a specific service domain, so that utilization of the computing resources can be improved.

In addition, in a conventional solution, a parallel acceleration algorithm is usually independently developed and deployed for each service domain based on a computing resource obtained through classification in advance. In this process, a large amount of repeated development is involved. As a result, development efficiency of the parallel acceleration algorithm is low, and development costs are high.

In this application, parallel acceleration algorithms required by the plurality of service domains are configured as one parallel acceleration algorithm set through centralized development of the parallel acceleration algorithms, and in actual use, a target parallel acceleration algorithm is determined from the set based on the computing request of the to-be-run service, to avoid repeated development of the parallel acceleration algorithm for each service domain. In this way, development efficiency of the parallel acceleration algorithm can be improved, and development costs of the parallel acceleration algorithm can be reduced.

Optionally, when the central computing platform 200 includes an intra-domain cache and an inter-domain cache, and when the computing request initiated by the to-be-run service is obtained, whether the cache includes a computing result corresponding to the computing request may be first determined. If the cache includes the computing result, the computing result may be directly obtained from the cache. When the cache does not include the computing result corresponding to the computing request, the foregoing step (that is, step S320) of determining, based on the computing request, the target parallel acceleration algorithm required for running the to-be-run service is performed, to avoid repeated computing. Alternatively, when the computing request initiated by the to-be-run service is obtained and the computing request indicates to obtain data in the cache, whether the cache includes a computing result corresponding to the computing request may be checked from the cache, to avoid repeated computing. When the computing request indicates not to obtain the data in the cache, the step (that is, step S320) of determining, based on the computing request, the target parallel acceleration algorithm required for running the to-be-run service may be performed, to directly obtain a computing result that meets the requirement of the to-be-run service.

In an implementation, the computing request may further include a cache identifier, and the cache identifier may indicate to enable the cache, disable the cache, or not limit whether to enable the cache. Enabling the cache may mean to obtain the data in the cache, and/or to store the computing result in the cache. Disabling the cache may mean not to obtain the data in the cache, and/or not to store the computing result in the cache.

The cache may store one or more entries, and each of the one or more entries may include a correspondence among a computing function, a computing input, and a computing result. The computing function may be specifically a function name or a function identifier of the computing function, and the computing function is a computing function related to the parallel acceleration algorithm. Based on the cache, in an actual operation, searching may be performed in the cache based on computing input data related to the to-be-run service. If the input data is found in the cache, a computing result corresponding to the input data in the cache may be used as the computing result required by the to-be-run service.

Optionally, each entry in the cache may further include data precision corresponding to the computing function, so that when the computing result is obtained from the cache, whether the computing result meets the requirement may be determined based on the data precision in the cache and data precision required for computing the to-be-run service. It should be noted that, when the data precision required for computing the to-be-run service is lower than the data precision in the cache, the computing result may be obtained; or when the data precision required for computing the to-be-run service is higher than the data precision in the cache, the computing result cannot be obtained.

A capacity of the intra-domain cache may be determined based on at least one of the following: a quantity of parallel acceleration algorithms that are invoked in the service domain within given time, a quantity of times for invoking the parallel acceleration algorithm, a size of input data of the invoked parallel acceleration algorithm, a size of output data of the invoked parallel acceleration algorithm, and the like.

A capacity of the inter-domain cache may be determined based on at least one of the following: a domain quantity of the plurality of service domains, an intra-domain cache capacity in each of the plurality of service domains, a quantity of parallel acceleration algorithms reused in the plurality of service domains, a total quantity of parallel acceleration algorithms invoked in each service domain, computing time consumed by the parallel acceleration algorithm in each service domain, and the like within given time.

Because the capacity of the cache is limited, cache space may be insufficient in a caching process. Based on this, this application proposes that when the cache space is insufficient, the entry in the cache is permuted and updated according to any one permutation principles of a least recently used (least recently used, LRU) permutation algorithm, a first input first output (first input first output, FIFO) permutation algorithm, and a priority permutation algorithm. It should be understood that, for the intra-domain cache, different permutation methods may be used for different service domains.

A priority of each entry in the intra-domain cache and/or the inter-domain cache may be determined based on any one of a priority of a service corresponding to the computing function, a priority of the computing function, a functional safety level of the service corresponding to the computing function, computing time consumed by the computing function, a precision requirement of the computing function, invoking duration of the computing function, a priority of a computing resource corresponding to the computing function, a size of a computing resource required for running the computing function, and the like in each entry. The priority of each entry in the inter-domain cache may also be determined based on a quantity of service domains that depend on the computing function.

After the to-be-run service is run based on the target computing resource, a computing result of running may be returned to the first service domain, and the computing result is performed through the first service domain.

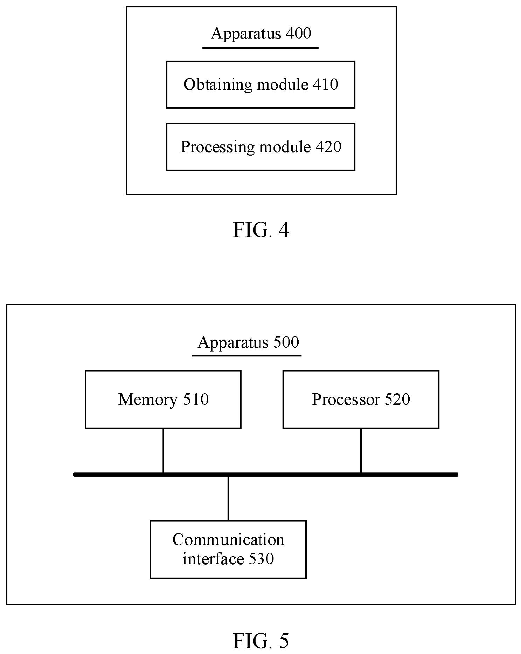

FIG. 4 is a diagram of a structure of a computing resource invoking apparatus according to an embodiment of this application. An apparatus 400 is applied to a central computing platform. The central computing platform supports a plurality of service domains, the central computing platform includes a parallel acceleration algorithm set and a plurality of computing resources, and each of the plurality of computing resources corresponds to N parallel acceleration algorithms, where N a positive integer greater than or equal to 1. The apparatus 400 includes an obtaining module 410 and a processing module 420.

The obtaining module 410 is configured to obtain a computing request initiated by a to-be-run service in a first service domain, where the first service domain is any one of the plurality of service domains.

The processing module 420 is configured to: determine, based on the computing request, a target parallel acceleration algorithm required for running the to-be-run service; invoke a target computing resource corresponding to the target parallel acceleration algorithm from the plurality of computing resources; and run the to-be-run service based on the target computing resource.

Optionally, the computing request may include an identifier of the to-be-run service, and the identifier may include at least one of a functional safety level identifier, a data precision identifier, a computing resource range, and the like that correspond to the to-be-run service.

Optionally, when the identifier includes the data precision identifier and the computing resource range, the processing module 410 may be configured to: select, from the parallel acceleration algorithm set, M parallel acceleration algorithms that meet the data precision identifier, where M is a positive integer greater than or equal to 1; and determine computing resources corresponding to the M parallel acceleration algorithms, and select, from the computing resources corresponding to the M parallel acceleration algorithms, one or more computing resources that meet the computing resource range as the target computing resource.

Optionally, when the identifier includes the functional safety level identifier, the target parallel acceleration algorithm may meet a functional safety level corresponding to the functional safety level identifier.

Optionally, the central computing platform may further include a cache, and before determining, based on the computing request, the target parallel acceleration algorithm required for running the to-be-run service, the processing module 410 may be further configured to: determine whether the cache includes a computing result corresponding to the computing request, and when the cache does not include the computing result corresponding to the computing request, perform the step of determining, based on the computing request, the target parallel acceleration algorithm required for running the to-be-run service.

Optionally, the central computing platform may further include a cache, and the processing module 410 may be configured to: when the computing request indicates not to obtain data in the cache, perform the step of determining, based on the computing request, the target parallel acceleration algorithm required for running the to-be-run service.

Optionally, the cache may store one or more entries, and each of the one or more entries may include a correspondence among a computing function, a computing input, and a computing result.

Optionally, each entry further may include data precision corresponding to the computing function.

Optionally, when the cache is an intra-domain cache, a capacity of the intra-domain cache may be determined based on at least one of the following: a quantity of parallel acceleration algorithms that are invoked in the first service domain within given time, a quantity of times for invoking the parallel acceleration algorithm, a size of input data of the invoked parallel acceleration algorithm, a size of output data of the invoked parallel acceleration algorithm, and the like.

Optionally, when the cache is an inter-domain cache, a capacity of the inter-domain cache may be determined based on at least one of the following: a domain quantity of the plurality of service domains, an intra-domain cache capacity in each of the plurality of service domains, a quantity of parallel acceleration algorithms reused in the plurality of service domains, a total quantity of parallel acceleration algorithms invoked in each service domain, computing time consumed by the parallel acceleration algorithm in each service domain, and the like within given time.

Optionally, the computing resource may include at least one of SVE, a GPU, DVPP, an ISP, an AI core, a vector core, and the like.

FIG. 5 is a block diagram of a hardware structure of a computing resource invoking apparatus according to an embodiment of this application. Optionally, an apparatus 500 may be specifically a computer device. The apparatus 500 includes a memory 510, a processor 520, and a communication interface 530. The memory 510, the processor 520, and the communication interface 530 may be communicatively connected to each other through a bus.

The memory 510 may be a read-only memory (read-only memory, ROM), a static storage device, a dynamic storage device, or a random access memory (random access memory, RAM). The memory 510 may store a program. When the program stored in the memory 510 is executed by the processor 520, the processor 520 is configured to perform the steps of the invoking method 300 in embodiments of this application.

The processor 520 may be a general-purpose central processing unit (central processing unit, CPU), a microprocessor, an application-specific integrated circuit (application-specific integrated circuit, ASIC), a GPU, or one or more integrated circuits, configured to execute a related program, to implement the invoking method 300 in the method embodiments of this application.

Alternatively, the processor 520 may be an integrated circuit chip and has a signal processing capability. In an implementation process, the invoking method 300 in this application may be completed by using an integrated logic circuit of hardware or instructions in a form of software in the processor 520.

The communication interface 530 uses a transceiver apparatus, for example, but not limited to, a transceiver, to implement communication between the apparatus 500 and another device or a communication network.

An embodiment of this application further provides a computer-readable storage medium, including instructions. When the instructions are run on a computer, the computer is enabled to perform the foregoing invoking method 300.

An embodiment of this application further provides a computer program product, including instructions. When the instructions are run on a computer, the foregoing invoking method 300 is performed.

An embodiment of this application further provides a computing device, including at least one processor and a memory. The at least one processor is coupled to the memory, and is configured to read and execute instructions in the memory, to perform the foregoing invoking method 300.

An embodiment of this application further provides a chip. The chip includes a processor and a data interface. The processor reads, through the data interface, instructions stored in a memory, to perform the invoking method 300, or the chip performs the invoking method 300 via a hardware circuit.

An embodiment of this application further provides an intelligent driving device, including the foregoing invoking apparatus 400 and/or apparatus 500.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A computing resource invoking method, applied to a central computing platform, wherein the central computing platform supports a plurality of service domains, the central computing platform comprises a parallel acceleration algorithm set and a plurality of computing resources, and each of the plurality of computing resources corresponds to N parallel acceleration algorithms in the parallel acceleration algorithm set, wherein N is a positive integer greater than or equal to 1; and the method comprises:
obtaining a computing request initiated by a to-be-run service in a first service domain, wherein the first service domain is any one of the plurality of service domains;
determining, based on the computing request, a target parallel acceleration algorithm required for running the to-be-run service;
invoking a target computing resource corresponding to the target parallel acceleration algorithm from the plurality of computing resources; and
running the to-be-run service based on the target computing resource.

2. The method according to claim 1, wherein the computing request comprises an identifier of the to-be-run service, and the identifier comprises at least one of a functional safety level identifier, a data precision identifier, and a computing resource range that correspond to the to-be-run service.

3. The method according to claim 2, wherein the identifier comprises the data precision identifier and the computing resource range, and the determining, based on the computing request, the target parallel acceleration algorithm required for running the to-be-run service comprises:
selecting, from the parallel acceleration algorithm set, M parallel acceleration algorithms that meet the data precision identifier, wherein M is a positive integer greater than or equal to 1; and
determining computing resources corresponding to the M parallel acceleration algorithms, and selecting, from the computing resources corresponding to the M parallel acceleration algorithms, one or more computing resources that meet the computing resource range as the target computing resource.

4. The method according to claim 3, wherein the identifier further comprises the functional safety level identifier, and the target parallel acceleration algorithm meets a functional safety level corresponding to the functional safety level identifier.

5. The method according to any one of claims 1 to 4, wherein the central computing platform further comprises a cache, and before determining, based on the computing request, the target parallel acceleration algorithm required for running the to-be-run service, the method further comprises:
determining whether the cache comprises a computing result corresponding to the computing request, and when the cache does not comprise the computing result corresponding to the computing request, performing the step of determining, based on the computing request, the target parallel acceleration algorithm required for running the to-be-run service.

6. The method according to any one of claims 1 to 4, wherein the central computing platform further comprises a cache, and the determining, based on the computing request, the target parallel acceleration algorithm required for running the to-be-run service comprises:
when the computing request indicates not to obtain data in the cache, performing the step of determining, based on the computing request, the target parallel acceleration algorithm required for running the to-be-run service.

7. The method according to claim 5 or 6, wherein the cache stores one or more entries, and each of the one or more entries comprises a correspondence among a computing function, a computing input, and a computing result.

8. The method according to claim 7, wherein each entry further comprises data precision corresponding to the computing function.

9. The method according to any one of claims 5 to 8, wherein
when the cache is an intra-domain cache, a capacity of the intra-domain cache is determined based on at least one of the following: a quantity of parallel acceleration algorithms that are invoked in the first service domain within given time, a quantity of times for invoking the parallel acceleration algorithm, a size of input data of the invoked parallel acceleration algorithm, and a size of output data of the invoked parallel acceleration algorithm; or
when the cache is an inter-domain cache, a capacity of the inter-domain cache is determined based on at least one of the following: a domain quantity of the plurality of service domains, an intra-domain cache capacity in each of the plurality of service domains, a quantity of parallel acceleration algorithms reused in the plurality of service domains, a total quantity of parallel acceleration algorithms invoked in each service domain, and computing time consumed by the parallel acceleration algorithm in each service domain within given time.

10. The method according to any one of claims 1 to 9, wherein the computing resource comprises at least one of the following: scalable vector extension SVE, a graphics processing unit GPU, digital vision pre-processing DVPP, an image signal processor ISP, an artificial intelligence AI core, and a vector core.

11. A computing resource invoking apparatus, used on a central computing platform, wherein the central computing platform supports a plurality of service domains, the central computing platform comprises a parallel acceleration algorithm set and a plurality of computing resources, and each of the plurality of computing resources corresponds to N parallel acceleration algorithms in the parallel acceleration algorithm set, wherein N is a positive integer greater than or equal to 1; and the apparatus comprises:
an obtaining module, configured to obtain a computing request initiated by a to-be-run service in a first service domain, wherein the first service domain is any one of the plurality of service domains; and
a processing module, configured to: determine, based on the computing request, a target parallel acceleration algorithm required for running the to-be-run service; invoke a target computing resource corresponding to the target parallel acceleration algorithm from the plurality of computing resources; and run the to-be-run service based on the target computing resource.

12. The apparatus according to claim 11, wherein the computing request comprises an identifier of the to-be-run service, and the identifier comprises at least one of a functional safety level identifier, a data precision identifier, and a computing resource range that correspond to the to-be-run service.

13. The apparatus according to claim 12, wherein the identifier comprises the data precision identifier and the computing resource range, and the processing module is configured to:
select, from the parallel acceleration algorithm set, M parallel acceleration algorithms that meet the data precision identifier, wherein M is a positive integer greater than or equal to 1; and determine computing resources corresponding to the M parallel acceleration algorithms, and select, from the computing resources corresponding to the M parallel acceleration algorithms, one or more computing resources that meet the computing resource range as the target computing resource.

14. The apparatus according to claim 13, wherein the identifier further comprises the functional safety level identifier, and the target parallel acceleration algorithm meets a functional safety level corresponding to the functional safety level identifier.

15. The apparatus according to any one of claims 11 to 14, wherein the central computing platform further comprises a cache, and before determining, based on the computing request, the target parallel acceleration algorithm required for running the to-be-run service, the processing module is further configured to:
determine whether the cache comprises a computing result corresponding to the computing request, and when the cache does not comprise the computing result corresponding to the computing request, perform the step of determining, based on the computing request, the target parallel acceleration algorithm required for running the to-be-run service.

16. The apparatus according to any one of claims 11 to 14, wherein the central computing platform further comprises a cache, and the processing module is configured to:
when the computing request indicates not to obtain data in the cache, perform the step of determining, based on the computing request, the target parallel acceleration algorithm required for running the to-be-run service.

17. The apparatus according to claim 15 or 16, wherein the cache stores one or more entries, and each of the one or more entries comprises a correspondence among a computing function, a computing input, and a computing result.

18. The apparatus according to claim 17, wherein each entry further comprises data precision corresponding to the computing function.

19. The apparatus according to any one of claims 15 to 18, wherein
when the cache is an intra-domain cache, a capacity of the intra-domain cache is determined based on at least one of the following: a quantity of parallel acceleration algorithms that are invoked in the first service domain within given time, a quantity of times for invoking the parallel acceleration algorithm, a size of input data of the invoked parallel acceleration algorithm, and a size of output data of the invoked parallel acceleration algorithm; or
when the cache is an inter-domain cache, a capacity of the inter-domain cache is determined based on at least one of the following: a domain quantity of the plurality of service domains, an intra-domain cache capacity in each of the plurality of service domains, a quantity of parallel acceleration algorithms reused in the plurality of service domains, a total quantity of parallel acceleration algorithms invoked in each service domain, and computing time consumed by the parallel acceleration algorithm in each service domain within given time.

20. The apparatus according to any one of claims 11 to 19, wherein the computing resource comprises at least one of the following: scalable vector extension SVE, a graphics processing unit GPU, digital vision pre-processing DVPP, an image signal processor ISP, an artificial intelligence AI core, and a vector core.

21. A computing resource invoking apparatus, comprising an input/output interface, a processor, and a memory, wherein the processor is configured to control the input/output interface to receive/send a signal or information, the memory is configured to store a computer program, and the processor is configured to: invoke the computer program from the memory and run the computer program, so that the invoking apparatus performs the invoking method according to any one of claims 1 to 10.

22. An intelligent driving device, comprising the invoking apparatus according to any one of claims 11 to 21.
